# FASCICULE DE BREVET EUROPEEN

(11) **EP 3 297 902 B1**
(45) Date de publication et mention de la délivrance du brevet: **13.11.2019**
(21) Numéro de dépôt: 16725802.9
(22) Date de dépôt: 18.05.2016
(51) Int. Cl.: B62M 6/85, B62H 3/04

(54) **ROUE DE VÉHICULE ÉQUIPÉE DE CELLULES SOLAIRES**
FAHRZEUGRAD MIT SOLARZELLEN
VEHICLE WHEEL FITTED WITH SOLAR CELLS

(30) Priorité: 18.05.2015 FR 1554417
(43) Date de publication de la demande: 28.03.2018
(73) Titulaire: Rool'in, 92800 Puteaux (FR)
(72) Inventeur: D'ACREMONT, Antoine, 92120 Montrouge (FR); KAHN, Maurice, 13011 Marseille (FR)
(74) Mandataire: Collet, Alain
(86) Numéro de dépôt international: PCT/EP2016/061159
(87) Numéro de publication internationale: WO 2016/184925

(56) Documents cités:
- EP-A1- 1 820 727
- DE-U1- 9 102 741
- US-A1- 2012 274 139
- US-B1- 6 262 558

## Description

L'invention concerne une roue de véhicule équipée de cellules solaires. La roue est particulièrement adaptée à un vélo mais peut également être mise en œuvre dans tout type de véhicule se déplaçant au moyen de roues. Pour un vélo, une roue conforme à l'invention peut être la roue avant ou la roue arrière du vélo, ou même les deux roues.

A ce jour, on cherche à réduire l'émission de polluant dans le transport de personnes. De nombreuses municipalités facilitent l'utilisation du vélo, notamment en aménageant de nombreuses pistes cyclables. Afin de permettre l'accès à ce type de transport à un grand nombre d'utilisateurs, des vélos à assistance électrique ont été développés. Ces vélos sont munis d'une batterie et d'un moteur électrique alimenté par la batterie. L'autonomie de ce type de vélo est limitée par la capacité de la batterie. De plus, à ce jour, les batteries nécessitent une durée de rechargement importante.

Afin d'augmenter l'autonomie des vélos à assistance électrique et notamment de permettre le rechargement des batteries, même lors de l'utilisation du vélo, on a équipé des vélos de cellules solaires photovoltaïques. Ce type de cellules nécessite une surface importante pour délivrer une puissance électrique notable. Le cadre du vélo ne dispose pas de surface suffisamment importante pour la mise en place de cellules solaires. Pour palier ce problème, on a tenté d'installer des cellules sur la jante d'une roue d'un vélo. Les réalisations actuelles ne sont pas optimisées. En effet, la roue d'un vélo est maintenue en place par une fourche maintenant l'axe de la roue. Cette fourche crée une ombre sur les cellules solaires, ombre qui tend à faire chuter la puissance électrique délivrée par les cellules. Lors de l'utilisation du vélo, la position relative de l'ombre par rapport à la jante varie et cela rend plus difficile la gestion de l'énergie délivrée par les cellules disposées sur la jante.

Par ailleurs, dans les réalisations existantes, on a tenté naturellement d'utiliser au maximum la surface disponible sur la jante en en recouvrant la quasi-totalité de la surface, hormis le moyeu. En effet, plus la surface des cellules est importante, plus la puissance qu'elles peuvent générer est importante. Une fois assemblées, les cellules solaires ont ainsi la forme d'une rondelle circulaire percée en son centre au niveau du moyeu de la roue. Cette forme de cellules n'est pas standard. Des développements de cellules différentes sont à envisager pour différents diamètres de roues. Ces développements particuliers génèrent des surcoûts industriels difficilement amortissables.

De plus, les cellules solaires classiques délivrent des tensions nominales relativement faibles qu'il peut être délicat d'utiliser pour la motorisation de la roue ou pour le stockage de l'énergie électrique produite par les cellules solaires.

Le document EP 1 820 727 A1 décrit un exemple de roue équipée de cellules solaires.

L'invention vise à pallier tout ou partie des problèmes cités plus haut en proposant une roue équipée de cellules solaires photovoltaïques et particulièrement optimisée. Plus précisément, une roue conforme à l'invention permet une optimisation structurelle, notamment en optimisant le remplissage de la surface de la jante par des cellules standards. Une roue conforme à l'invention permet aussi une optimisation fonctionnelle, notamment en optimisant la gestion des ombrages. Parmi ces ombrages, on peut distinguer, des ombrages proches et des ombrages distants. Certains ombrages proches sont mobiles par rapport à la roue, comme par exemple ceux générés par le mouvement relatif de la fourche par rapport à la roue. D'autres ombrages proches sont fixes. Ils peuvent intervenir lors du fonctionnement du véhicule équipé de la roue. Ces ombrages fixes sont par exemple dus à des projections de boue sur la surface des cellules. Les ombrages distants sont formés lors de variations de position de la roue dans son environnement, comme par exemple lorsque le soleil n'éclairement pas directement la jante.

A cet effet, l'invention a pour objet une roue de véhicule équipée de cellules solaires photovoltaïques, caractérisée en ce qu'elle comprend :
- plusieurs circuits comprenant chacun plusieurs cellules solaires photovoltaïques et un module de poursuite d'un point de puissance maximum des cellules solaires photovoltaïques du circuit, les cellules solaires photovoltaïques de chacun des circuits étant disposées sur un secteur angulaire radial de la roue, les différents secteurs étant distincts les uns des autres, les cellules solaires photovoltaïques de chacun des circuits étant connectées en série.
un module de collecte de l'énergie délivrée par les différents modules de poursuite.

Le module de collecte peut être configuré pour raccorder les différents circuits en série ou en parallèle et pour passer d'un raccordement série à un raccordement parallèle et inversement lors de l'utilisation de la roue.

Toutes les cellules équipant la roue sont avantageusement identiques et les différents circuits comprennent chacun le même nombre de cellules solaires photovoltaïques.

Les cellules d'un des circuits peuvent être formées de parties de cellules photovoltaïques du commerce.

La roue comprend deux faces perpendiculaires à un axe de rotation de la roue. Les cellules peuvent être des cellules photovoltaïques double face, chacune des faces des cellules correspondant avec les faces de la roue.

La roue peut comprendre un stockeur d'énergie électrique pouvant être rechargé par les cellules solaires photovoltaïques.

La roue peut comprendre une machine électrique pouvant être alimentée par les cellules solaires photovoltaïques et pouvant entrainer la roue en rotation. Le stockeur d'énergie échange alors de l'énergie avec la machine électrique.

La roue peut comprendre en outre une charge électrique alimentée par le stockeur d'énergie et/ou par les cellules solaires photovoltaïques.

La roue peut comprendre un connecteur permettant d'échanger de l'énergie électrique vers l'extérieur de la roue. Le connecteur peut être à induction et comprend plusieurs bobines secondaires configurées pour recevoir de l'énergie d'une borne de rechargement comprenant au moins une bobine primaire.

La roue peut comprendre un module de gestion de l'énergie configuré pour équilibrer en temps réel des puissances électriques produites et consommées par les différents composants de la roue.

Le module de gestion de l'énergie peut être configuré pour permettre un écrêtage de la puissance délivrée par au moins une des cellules photovoltaïques.

Le module de gestion peut comprendre deux sous ensembles, dont un premier sous ensemble est dédié à la production d'énergie provenant des différents modules de poursuite et dont un second sous ensemble gère les autres composants de la roue consommant ou produisant de l'énergie. La roue peut également comprendre un détecteur de lumière configuré pour couper l'alimentation électrique du premier sous ensemble et/ou des différents modules de poursuite si la lumière détectée est inférieure à un seuil.

La charge électrique peut être un émetteur de lumière. Le détecteur de lumière peut alors être configuré pour alimenter l'émetteur de lumière si la lumière détectée est inférieure à un seuil.

La roue peut être ajourée entre les cellules solaires photovoltaïques.

L'invention sera mieux comprise et d'autres avantages apparaîtront à la lecture de la description détaillée d'un mode de réalisation donné à titre d'exemple, description illustrée par le dessin joint dans lequel :
la figure 1 représente un vélo dans lequel l'invention peut être mise en œuvre ;
les figures 2 à 4 représentent trois variantes de roue conformes à l'invention ;
la figure 5 représente, pour la variante de la figure 2, un exemple de connexions électriques de cellules solaires ;
la figure 6 représente, pour la variante de la figure 4, un exemple de connexions électriques de cellules solaires ;
la figure 7 représente une variante de roue dans laquelle des cellules du commerce sont coupées ;
les figures 8A et 8B représentent une roue équipée de diodes électroluminescentes
la figure 9 représente un exemple de caractéristique courant-tension d'une cellule solaire ;
la figure 10 représente un exemple d'association de composants permettant de suivre le point de puissance maximum de circuits de cellules solaires connectées en série ;
les figures 11 à 15 représentent, sous forme de schéma bloc, plusieurs variantes représentant les différents éléments électriques d'une roue conforme à l'invention ;
la figure 16 représente une variante de la roue permettant un raccordement électrique sans contact vers l'extérieur de la roue.

Par souci de clarté, les mêmes éléments porteront les mêmes repères dans les différentes figures.

L'invention est illustrée à partir d'une roue de vélo. L'invention permet de réaliser une roue autonome pouvant être utilisée sur un vélo existant non prévu à l'origine pour bénéficier d'une assistance électrique. Il est bien entendu que l'invention peut être mise en œuvre dans tout autre type de véhicule sur roue. Un vélo utilise classiquement deux roues. Le vélo peut utiliser une ou deux roues conformes à l'invention. Par ailleurs, l'invention peut être mise en œuvre dans tout type de véhicule quelque soit le nombre de roues comme un tricycle ou un quadricycle. Ces véhicules peuvent ne mettre en œuvre aucun autre moteur que celui prévu dans un mode préférentiel de l'invention. Alternativement, le véhicule peut comprendre un moteur centralisé et bénéficier en complément d'une roue motorisée pour compléter la propulsion du véhicule.

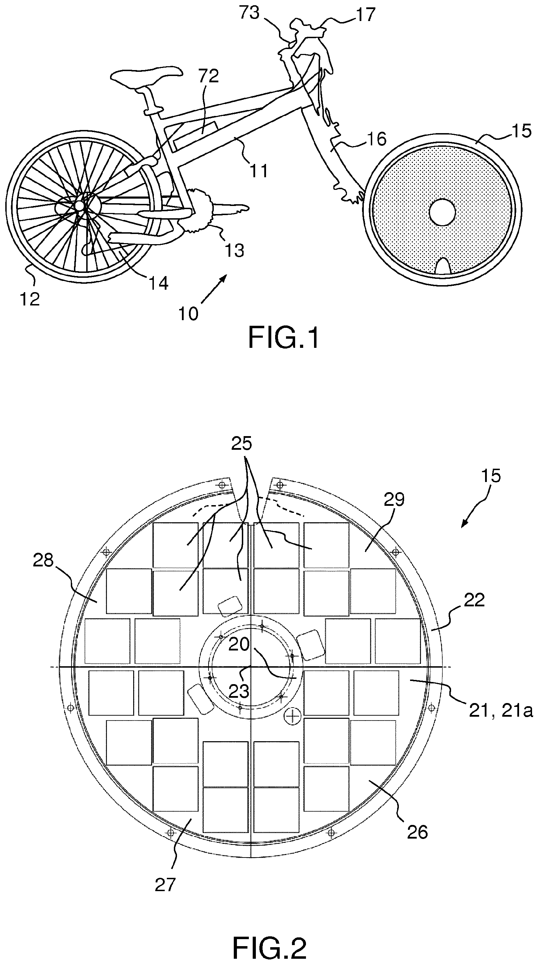

La figure 1 représente un vélo 10 comprenant de façon classique un cadre 11, une roue arrière 12 entrainée par un pédalier 13 par l'intermédiaire d'une chaîne 14, et une roue avant 15 directrice. La roue avant 15 est maintenue par une fourche 16 mobile en rotation par rapport au cadre 11. Le contrôle de la position angulaire de la fourche 16 par rapport au cadre 11 est assuré par un guidon 17. Sur la figure 1, la roue avant 15 est représentée démontée de la fourche 16.

La figure 2 représente un exemple de roue 15 seule. La roue 15 comprend, autour d'un moyeu central, 20 une jante 21 et un pneu 22. La jante 21 comprend deux faces opposées 21a et 21b sensiblement planes et perpendiculaires à l'axe 23 de la roue 15. Dans la pratique, les faces 21a et 21b peuvent être légèrement tronconiques autour de l'axe 23. Sur la figure 2, la roue 15 est représentée dans un plan perpendiculaire à l'axe 23 et seule la face 21a est visible. La face 21b est symétrique de la face 21a par rapport à un plan passant par le pneu 22.

Plusieurs cellules solaires 25 sont disposées sur la face 21a. Les différentes cellules 25 sont avantageusement identiques. Le fait de mettre en œuvre des cellules identiques présente plusieurs avantages. Les différentes cellules ont toutes les mêmes caractéristiques électriques. De plus, l'identité des cellules permet de les standardiser afin de réduire leur coût de revient. Les cellules représentées sur la figure 2 ont un format carré. D'autres formats sont bien entendu possible, polygonales, circulaires... Le choix du format est à réaliser en fonction de la disponibilité sur le marché et d'un meilleur taux de remplissage des faces 21a et 21b de la jante 21. Dans l'exemple représenté sur la figure 2, la face 21a est divisée en quatre secteurs angulaires 26, 27, 28 et 29 autour de l'axe 23. Les différents secteurs 26 à 29 couvrent le même angle à savoir 90° chacun. Sept cellules 25 sont disposées dans chacun des secteurs. Suivant la taille et la disposition des cellules, un nombre différent de cellules peut être mis en œuvre. Les deux faces 21a et 21b sont avantageusement identiques.

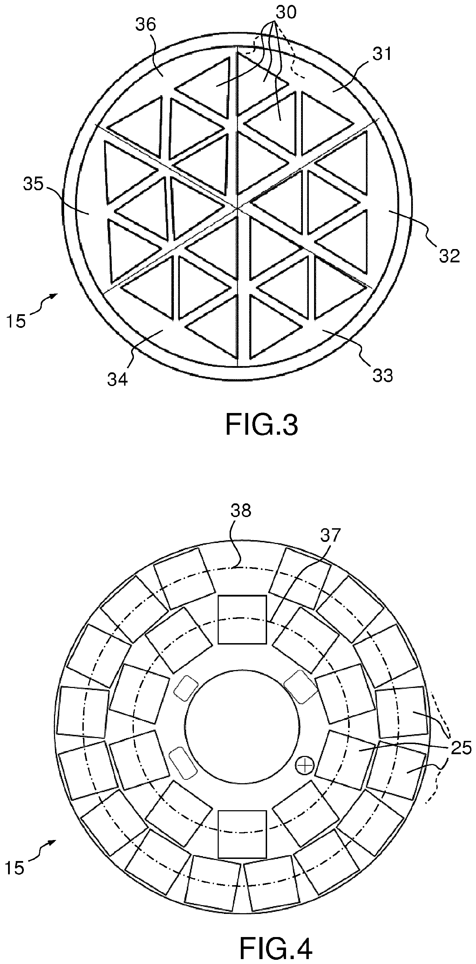

La figure 3 représente un autre exemple de roue 15 comprenant des cellules solaires 30 ayant toutes une forme triangulaire. La face 21a est ici divisée en six secteurs angulaires 31 à 36 couvrant chacun 60° autour de l'axe 23. Chacun des secteurs comprend quatre cellules 30.

Dans les exemples de répartition des cellules illustrés sur les figures 2 et 3, les cellules sont disposées par groupes occupant chacun un secteur angulaire de la roue, sans déborder sur les secteurs angulaires voisins. Cette disposition est avantageuse du fait de l'ombre générée par la fourche, ombre que se déplace radialement relativement à la roue. D'autres disposition des cellules sont possibles, notamment dans le but d'optimiser le remplissage des faces 21a et 21b par les cellules.

La figure 4 représente un autre exemple de roue 15 dans laquelle les cellules 25 disposées sur chacune des faces 21a et 21b sont réparties de façon radiales autour de l'axe 23. Plus précisément, les cellules sont disposées sur plusieurs couronnes s'étendant autour de l'axe 23, deux couronnes 37 et 38 dans l'exemple de la figure 3.

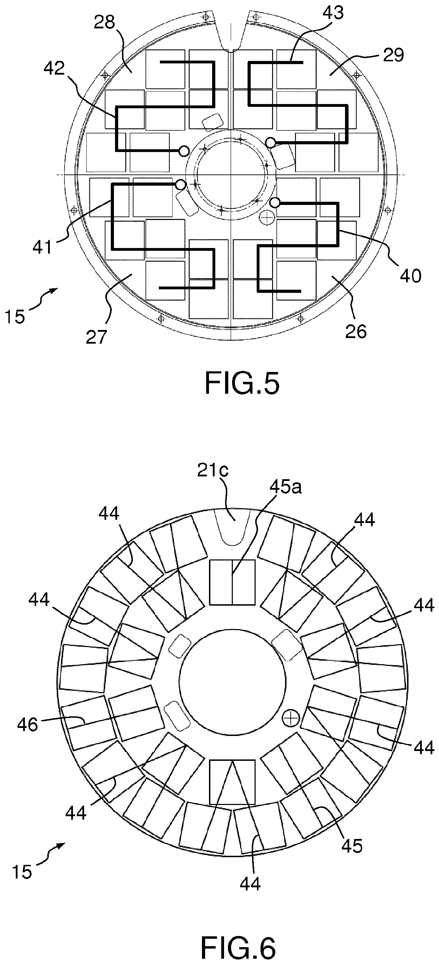

La figure 5 reprend l'exemple de répartition des cellules solaires 25 de la figure 2. La figure 5 permet d'illustrer un exemple de raccordement simple des cellules entre elles. Dans chacun des secteurs 26 à 29, les sept cellules 25 sont raccordées en série formant un circuit. Le raccordement est ici figé à la conception de la roue. Cela permet de simplifier le raccordement filaire des différentes cellules.

Dans le secteur 26, l'ordre des cellules 25 est représenté par un trait fort 40. Dans la pratique, les cellules 25 sont raccordées par deux fils conducteurs, l'un pour le potentiel positif et l'autre pour le potentiel négatif. Ces deux fils sont schématisés par le trait fort 40. L'ordre des cellules 25 est défini de façon à minimiser la longueur des connexions afin de simplifier le câblage et de limiter les pertes par effet joule. De même dans le secteur 27, l'ordre des cellules 25 est représenté par un trait fort 41, dans le secteur 28, par un trait fort 42 et dans le secteur 29, par un trait fort 43. Ainsi, dans un même secteur, la tension que chaque cellule délivre s'ajoute. Pour l'exemple représenté sur la figure 3, il en est de même, les quatre cellules 30 d'un même secteur sont raccordées en série.

La figure 6 représente un exemple de raccordement de cellules reprenant la répartition des cellules de la figure 4. Plusieurs circuits de cellules raccordées en série sont formés. Comme précédemment, les différents circuits sont représentés par des traits forts joignant chacun les cellules d'un même circuit. Chaque circuit comprend plusieurs cellules 25 voisines et appartenant à des couronnes différentes. Le nombre de cellules 25 par circuit peut varier. Dans l'exemple représenté, des circuits 44 comprennent trois cellules 25, des circuits 45 comprennent deux cellules 25 et un circuit 45a ne comprend qu'une seule cellule 25 par exemple à cause d'une interruption 21c des faces 21a et 21b. L'interruption 21c peut être utilisée pour disposer une valve permettant le gonflage d'un pneu équipant la roue ou pour permettre de placer un antivol. Au niveau de cette interruption, la couronne 38 ne comprend pas de cellule 25. Les deux cellules 25 des circuits 45 appartiennent chacune à une des couronnes 37 et 38 et sont disposées sensiblement sur une direction radiale de la face considérée 21a ou 21b. Les trois cellules des circuits 44 sont disposées sur les différentes couronnes 37 et 38, deux cellules 25 sur la couronne extérieure 38 et une sur la couronne intérieure 37. Les deux cellules de la couronne extérieure sont voisines. Elles sont disposées chacune sur une direction radiale de la jante. La cellule 25 de la couronne intérieure est disposée sur une autre direction radiale s'étendant dans l'angle aigu formé par les directions radiales des deux cellules de la couronne extérieure 38. En d'autres termes, les différentes cellules 25 d'un même circuit sont choisies pour être situées dans un secteur angulaire de la roue le plus petit possible.

En utilisation, une des faces 21a ou 21b peut recevoir un éclairage direct du soleil. Lorsque la roue 15 tourne, la fourche 16, de part sa proximité avec la roue 15, génère une ombre sur la face éclairée. Comme évoqué plus haut, cette ombre est qualifiée d'ombre proche. Cette ombre se situe dans l'un des secteurs angulaire. Lorsqu'une ombre apparait sur une cellule solaire 25 ou 30, l'intensité qu'elle délivre chute de façon très importante. Dans un circuit de cellules raccordées en série, l'intensité délivrée est limitée par la cellule délivrant l'intensité la plus faible. Ainsi, les cellules solaires d'un même circuit ne délivrent quasiment plus de courant lorsque la fourche 16 masque au moins une des cellules de ce circuit. Dans la répartition représentée sur la figure 2, la fourche 16 masque en permanence l'un des secteurs 26 à 29, le secteur masqué variant avec la rotation de la roue 15. Autrement dit, lorsqu'une face 21a ou 21b est éclairée par le soleil, trois secteurs sur quatre produisent un courant nominal. De façon plus générale, pour une roue divisée en N secteurs angulaire, N étant un nombre entier, N-1 secteurs produisent un courant nominal. Le nombre N de secteurs est choisi de façon à ce que la fourche 16 ne masque qu'un seul secteur à la fois et de façon à remplir au mieux la surface de la face considérée.

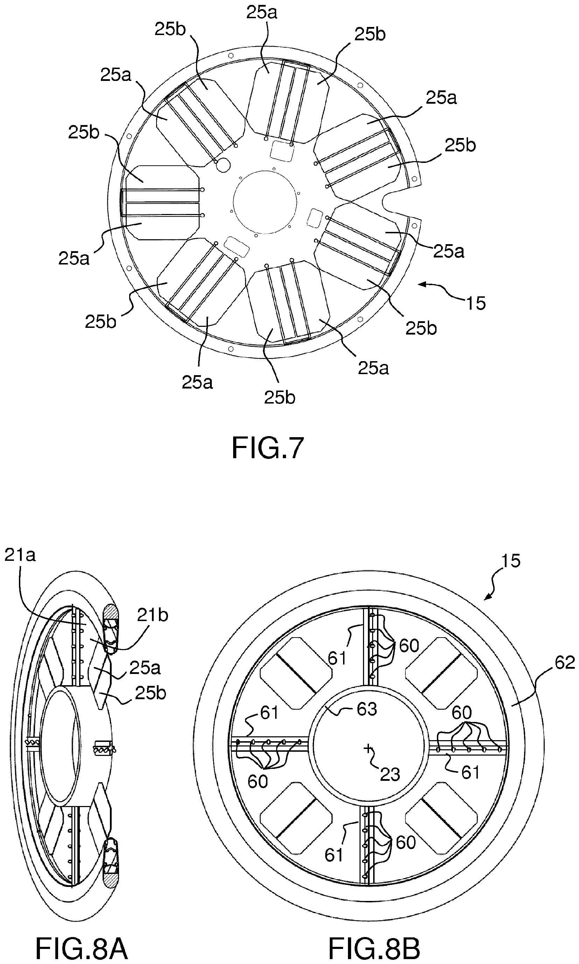

La figure 7 représente une variante de la roue 15 possédant 7 circuits. Chaque circuit est formé de deux cellules 25a et 25b. Afin de permettre l'utilisation de cellules les plus standards possibles, les deux cellules d'un circuit sont formées de parties de cellules photovoltaïques du commerce et plus précisément dans l'exemple représenté de demi cellules 25a et 25b du commerce. Une cellule du commerce fournit typiquement une tension de l'ordre 0,6V. En coupant la cellule en deux parties et en raccordant en série les deux demi cellules, on obtient typiquement une tension de l'ordre de 1,2V. Cette tension est supérieure à une tension de seuil courante d'une diode qui est de l'ordre de 0,6V. Il est possible de couper la cellule du commerce en plus de deux parties. Le choix du nombre de parties se fait en fonction du dessin des parties actives de la cellule et de la tension typique recherchée pour le circuit. La découpe de la cellule du commerce peut se faire au moyen d'un laser ou d'un outil de coupe diamanté. Le nombre de circuits, formés de cellules du commerce coupées, est défini notamment en fonction des dimensions des cellules du commerce. On peut chercher à remplir au maximum les faces de la roue sur lesquelles sont installées les cellules.

Les figures 8A et 8B représentent une autre variante de roue équipée de diodes électroluminescentes 60 par exemple disposées sur des rayons 61 de la roue 15. Les diodes électroluminescentes 60 sont par exemples utilisées pour signaler le véhicule équipé de la roue 15, par exemple comme clignotant utilisé sur commande de l'utilisateur pour signaler un changement de direction ou comme éclairage lorsque le niveau de lumière ambiante le nécessite. La disposition sur des rayons permet une bonne visibilité de la roue 15 lorsqu'elle tourne. D'autres dispositions sont bien entendu possibles, par exemple sur la jante 62 de la roue 15. De façon plus générale, la roue 15 comprend un ou plusieurs émetteurs de lumière. Les diodes électroluminescentes 60 présentent l'avantage d'une faible consommation électrique mais d'autres types d'émetteurs peuvent être mis en œuvre. De façon encore plus générale la roue peut comprendre tout autre type de charge électrique, comme par exemple un avertisseur sonore.

La figure 8A représente la roue 15 dans un plan perpendiculaire à son axe de rotation 23 et la figure 8B en perspective. La roue comprend quatre circuits comprenant chacun les deux demi cellules 25a et 25b. Chaque circuit est disposé entre deux rayons 61 de la roue 15. Les deux faces opposées 21a et 21b de la roue 15 sont, dans cette variante, plaquées l'une contre l'autre entre la jante 62 et un moyeu 63. Le nombre de rayons 61 et le nombre de cellules représentés sur la figure n'est donné qu'à titre d'exemple. Il est bien entendu possible de choisir un autre nombre de rayons et de cellules. De plus, il est possible de disposer plusieurs circuits distincts entre chaque rayon 61.

Les demi cellules 25a et 25b sont des cellules photovoltaïques double face, chacune des faces des cellules correspondant avec les faces 21a et 21b de la roue 15. Les cellules double face sont formées par un ensemble autonome plat pouvant collecter de l'énergie solaire et la transformer en énergie électrique sur chacun de ses faces opposées. Certains fabricants vendent directement ce type de cellule en tant que composant. Il est également possible d'assembler deux cellules simple face tête bêche pour réaliser une cellule double face. Les ensembles autonomes sont avantageusement tous identiques afin de standardiser leur fabrication et leur montage sur la roue 15.

Dans cette variante, il est possible de mettre en œuvre l'invention au moyen de cellules photovoltaïques non coupées.

Un circuit de cellules raccordées en série peut être formé par les deux faces d'une cellule double face utilisant le même MPPT. Alternativement, il est possible de connecter à un même MPPT uniquement des cellules d'une même face 21a ou 21b de la roue 15. En effet, l'éclairage des cellules est souvent bien différent d'une face de la roue à l'autre. Les cellules d'une même face auront donc un point de puissance maximum différent.

Le roue 15 peut être ajourée entre les cellules photovoltaïques afin de limiter la prise au vent en cas de vent latéral. Plus précisément, dans la variante représentée sur les figures 8A et 8B, entre les rayons 61 et autour des ensembles formées par les cellules 25a et 25b. Il est possible de fixer les cellules photovoltaïques directement sur les rayons 61 ou entre eux. Toutes les autres variantes de roue 15 peuvent également être ajourées.

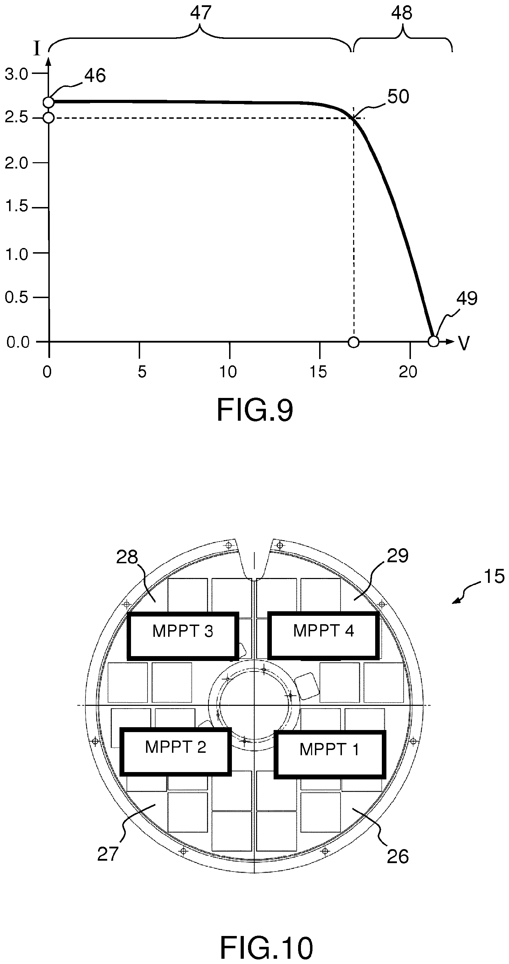

La figure 9 représente un exemple de caractéristique courant-tension d'une cellule solaire photovoltaïque 25, 25a, 25b ou 30. A ce jour, il existe plusieurs types de cellules solaires photovoltaïques. On trouve surtout des cellules réalisées sur un substrat en silicium. Les cellules réalisées sur un substrat en silicium amorphe sont les moins couteuses. En revanche leur rendement par rapport à l'éclairement solaire reçu est relativement faible, de l'ordre de 5 à 10%. Les cellules réalisées sur un substrat en silicium poly cristallin sont plus couteuses. Leur rendement est de l'ordre de 12 à 18%. Enfin les cellules réalisées sur un substrat en silicium monocristallin sont encore plus couteuses. Leur rendement est de l'ordre de 17 à 20% et peut dépasser les 20% pour les meilleures cellules actuelles. Ces différents types de cellules peuvent être mis en œuvre dans le cadre de l'invention. Plus généralement, tous les types de cellules solaires photovoltaïques peuvent être mise en œuvre dans le cadre de l'invention quelque soit leur substrat.

La caractéristique de la figure 9 est donnée pour un éclairement donné. La tension disponible en sortie de la cellule solaire est représentée en abscisse et le courant en ordonnée. Lorsque la cellule est en court-circuit, le courant est appelé courant de court circuit 46 représenté sur l'axe des ordonnées. En fonction d'une charge raccordée aux bornes de la cellule, lorsque la tension aux bornes de la cellule s'accroit, l'intensité diminue. Dans une première partie 47 de la courbe, cette décroissance est très faible. Dans une seconde partie 48 de la courbe, la décroissance du courant s'accélère jusqu'à atteindre un point 49 appelé tension en circuit ouvert où aucune charge n'est raccordée aux bornes de la cellule. Le point de puissance maximum de la cellule est noté 50 sur la figure 9. Ce point correspond au maximum du produit de la tension par l'intensité.

Il existe des composants spécialement développés pour suivre ce point de puissance maximum. Ce type de composant est bien connu dans la littérature anglo-saxonne sous le nom de « Maximum Power Point Tracker ». On utilise un composant de ce type, appelé MPPT par la suite, par groupe de cellules connectées en série.

La figure 10 représente la roue 15 dans la variante de la figure 2. Au circuit du secteur 26 est associé un MPPT 1. De même, au circuit du secteur 27 est associé un MPPT 2, au circuit du secteur 28 est associé un MPPT 3 et au circuit du secteur 29 est associé un MPPT 4.

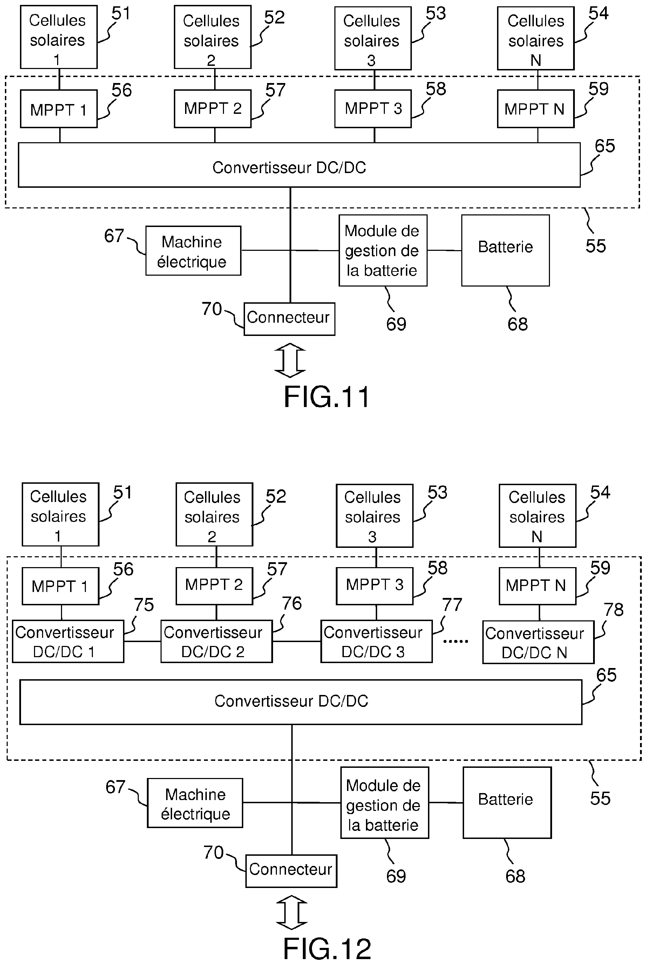

La figure 11 représente sous forme de schéma bloc les principaux éléments électriques d'une roue conforme à l'invention. Ce schéma est bien adapté à une répartition figée du raccordement des différentes cellules solaires entre elles.

On retrouve les N circuits de cellules connectées entre elles en série. Les différents circuits sont repérés 51 à 54 sur la figure 11. Ces circuits sont solidaires de la jante 21. Dans les exemples représentés sur les figures 2 à 4, chaque circuit occupe un secteur angulaire d'une des faces 21a ou 21b. Les circuits 51 à 54 sont connectés à un module électronique 55 par exemple réalisé à partir d'un circuit imprimé disposé à l'intérieur de la jante 21 entre les faces 21a et 21b. Le module électronique comprend N MPPT 56 à 59, chacun raccordé à aux cellules d'un des circuits 51 à 54. Chacun des MPPT recherche le point de puissance maximale des cellules auxquelles il est raccordé.

Le module électronique 55 comprend un convertisseur continu-continu 65 raccordé aux N MPPT 56 à 59. Le convertisseur 65 reçoit les courants délivrés par les N MPPT 56 à 59 pour délivrer une tension prédéfinie et compatible avec des charges du système électrique.

La roue 15 comprend avantageusement une machine électrique 67 pouvant fonctionner en moteur permettant d'entrainer la roue en rotation par rapport à la fourche 16. La machine électrique 67 est alimentée en sortie du convertisseur 65. Autrement dit, la machine électrique 67 peut être alimentée par les cellules solaires.

La roue 15 peut également comprendre une ou plusieurs batteries 68 associées à un module 69 de gestion de la batterie. La machine électrique 67 et la batterie 68, par l'intermédiaire de son module 69, sont raccordées en sortie du convertisseur 65. La batterie 68 permet de stocker l'énergie électrique provenant des cellules solaires si cette énergie n'est pas utilisée par d'autres charges telle que la machine électrique 67 par exemple. Tout autre stockeur d'énergie peut être utilisé en complément ou à la place de la batterie 68 tel que par exemple un ou plusieurs super condensateur, un ou plusieurs volants d'inertie.

La machine électrique 67 peut également être pilotée comme une génératrice pouvant produire de l'énergie électrique, par exemple lorsque l'utilisateur souhaite freiner le vélo 10.

La roue 15 peut également comprendre un connecteur 70 raccordé en sortie du convertisseur 65. Le connecteur 70 permet d'échanger de l'énergie électrique vers l'extérieur de la roue 15. Le connecteur 70 peut être disposé sur une des faces 21a ou 21b de la jante 21, dans un espace laissé disponible entre les cellules solaires 25 ou 30. Cette disposition est très simple à réaliser. Elle présente néanmoins l'inconvénient de ne pouvoir être utilisé que lorsque le vélo est arrêté. Le connecteur 70 permet par exemple de recharger la batterie 68 lorsque le vélo est à l'arrêt.

Il est également possible de placer le connecteur 70 sur l'axe de la roue 15. Il est alors raccordé au module 55 au moyen d'un collecteur tournant, non représenté. Le connecteur 70 peut alors être connecté au cadre 11 du vélo par un câble électrique disposé le long de la fourche 16. Il est ainsi possible d'échanger de l'énergie électrique entre la roue 15 et le reste du vélo 10 même lorsque le vélo est en service. Cet échange d'énergie peut par exemple permettre de compléter le stockeur d'énergie de la roue 15 par un autre stockeur d'énergie, telle qu'une batterie 72, solidaire du cadre 11. La batterie 72 peut permettre de stoker de l'énergie provenant des cellules solaires lorsque la batterie 68 est pleine. La batterie 72 peut également alimenter la machine électrique 67 lorsque la batterie 68 est vide. Le vélo 10 peut également disposer d'un connecteur 73 par exemple disposé au niveau du guidon 17. Le connecteur 73 est raccordé au connecteur 70. Le connecteur 73 permet de raccorder le vélo soit à une source d'énergie extérieure, notamment pour recharger la ou les batteries 68 et 72 lorsque le vélo est à l'arrêt, soit à une charge utilisée lorsque le vélo est en service. Parmi les charges, on peut par exemple citer l'éclairage du vélo ou tout autre appareil, tel que par exemple un téléphone portable.

La figure 12 représente une variante du module électronique 55 dans laquelle le module électronique 55 comprend N convertisseurs continu-continu 75 à 78 raccordés chacun à l'un des MPPT 56 à 59. Les convertisseurs 75 à 78 reçoivent chacun le courant issu des circuits 51 à 54 à une tension déterminée par le MPPT correspondant. Les convertisseurs 75 à 78 sont raccordés en série. Plus précisément, les convertisseurs 75 à 78 possèdent deux entrées raccordées à la sortie d'un MPPT pour l'une et à la sortie d'un des autres convertisseurs 75 à 78 pour l'autre entrée. Par exemple, pour un convertisseur de rang i, i été compris entre 1 et N, le convertisseur i reçoit en entrée le courant de sortie du MPPTi et le courant de sortie du convertisseur i-1. Le dernier convertisseur 78 délivre un courant au convertisseur 65. Il existe des composants remplissant à la fois la fonction de poursuite du point de puissance maximale et de convertisseur continu-continu. Ce type de composant peut être mis en œuvre pour le MPPTi et le convertisseur i. Alternativement, il est possible de dissocier les deux fonctions. On peut alors se passer d'un des convertisseurs 78 ou 65.

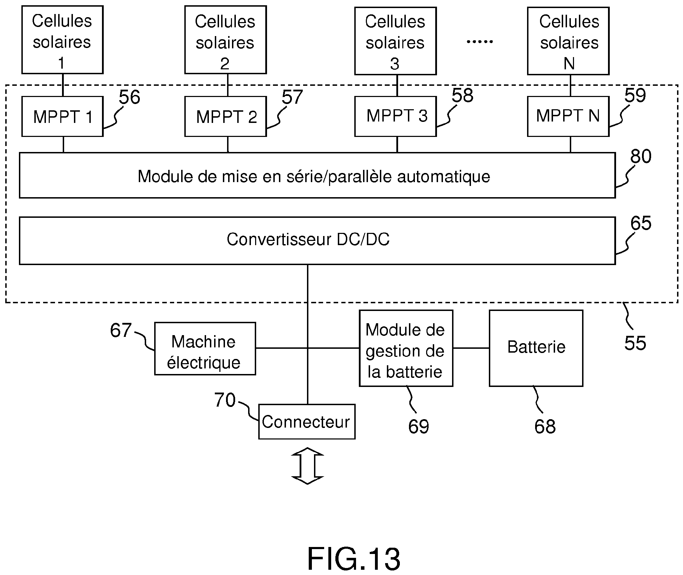

La figure 13 représente une variante du module électronique 55 adaptée à une répartition variable du raccordement des différentes cellules solaires entre elles. En effet, si l'une des cellules raccordée à un des MPPT ne fournit pas, ou peu, de courant, par exemple parce qu'elle est à l'ombre ou pour toute autre raison comme une panne, alors toute la chaîne de cellules raccordée au MPPT voit son courant chuter. On perd alors le bénéfice des autres cellules de la chaîne. Une telle éventualité peut par exemple se produire si lors de l'utilisation du vélo, une projection de boue venant par exemple masquer en partie une cellule. Pour pallier ce problème on peut mettre en œuvre une répartition variable dans le temps lors de l'utilisation de la roue 15. A cet effet, chacune des cellules solaires photovoltaïques 25 ou 30 est avantageusement raccordée à un MPPT. Pour limiter le nombre de MPPT, il est également possible de raccorder plusieurs cellules en série à un même MPPT. On perd en partie l'avantage de l'individualisation du fonctionnement des cellules mais, en revanche, on réduit le nombre de MPPT, ce qui permet de réduire le coût de la roue 15.

Pour assurer la répartition variable, le module électronique 55 comprend un module 80 de mise en série et/ou en parallèle des différentes sorties des MPPT de façon automatique. Il est ainsi possible d'adapter les combinaisons entre les cellules à la puissance qu'elles délivrent en temps réel. Le module 80 comprend par exemple des capteurs de courant de sortie des MPPT, un microcontrôleur recevant les mesures de courant et un module d'aiguillage comprenant des interrupteurs électroniques pilotés par le processeur. Les interrupteurs électroniques permettent de mettre en série ou en parallèle les différentes cellules ou groupes de cellules. Le microcontrôleur met en œuvre un programme chargé dans sa mémoire et permettant de faire varier en temps réel le pilotage des interrupteurs électroniques. Le programme peut par exemple mettre en série les cellules délivrant le même courant ou un courant voisin dans une plage de tolérance prédéterminée. Ainsi une cellule, voyant son courant chuter, est mise à l'écart d'autres cellules pouvant délivrer un courant plus important. Le nombre de cellules mises en série est choisi pour atteindre une tension donnée. Le module 80 peut totalement déconnecter un ou des MPPT délivrant un courant trop faible voire nul.

Le module 80, peut mettre en parallèle plusieurs MPPT de façon à ce que la tension en entrée du convertisseur 65 soit supérieure à un seuil donné afin de limiter la complexité et donc l'encombrement du convertisseur 65. En effet, le dimensionnement d'un convertisseur est lié à l'écart de tension entre son entrée et sa sortie. En interdisant que le convertisseur 65 soit alimenté avec une tension inférieure au seuil, on limite son encombrement.

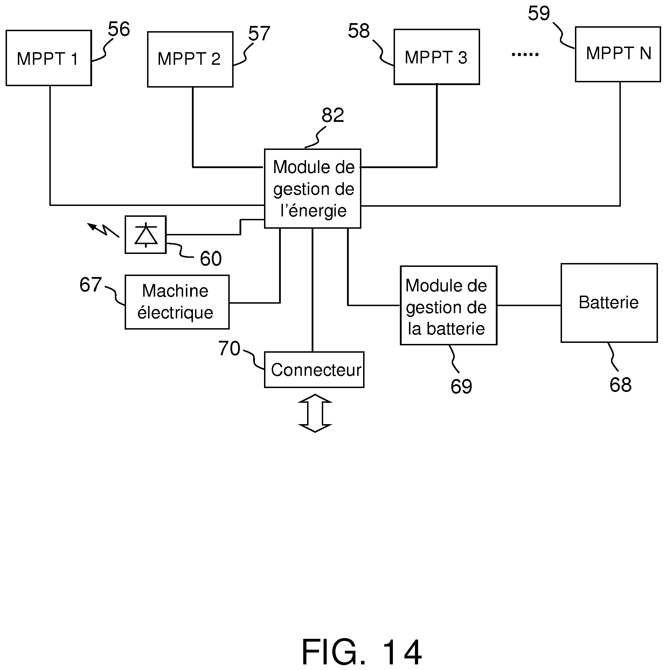

La figure 14 représente une généralisation du schéma bloc de des figures 11 à 13 dans lequel un module de gestion de l'énergie 82 reçoit les sorties des différents MPPT et échange de l'énergie avec la machine électrique 67, avec la batterie 68 et éventuellement le connecteur 70. La roue 15 peut également comprendre d'autres consommateurs d'énergie, raccordés au module 82, tels que par exemple les diodes électroluminescentes 60.

Le module de gestion de l'énergie 82 a pour fonction d'équilibrer le micro réseau électrique établi entre des composants de production (cellules photovoltaïques, machine électrique 67 fonctionnant en générateur et alimentation extérieure transitant par le connecteur 70), de consommation (machine électrique 67 fonctionnant en moteur d'entrainement de la roue et autres charges notamment connectées au connecteur 70) et de stockage d'électricité (batterie 69).

Le module 82 est configuré pour équilibrer en temps réel les puissances électriques produites et consommées. La batterie 69 peut participer à la puissance produite ou consommée en fonction de son mode de fonctionnement en charge ou en décharge. Il en est de même pour le connecteur 70 qui peut faire transiter de la puissance en entrée ou en sortie de la roue. Les différents composants de production, de consommation et de stockage peuvent être reliés au module 82 par un bus sur lequel transite des données de fonctionnement en complément d'un bus de puissance. Le bus de donnée peut être filaire et utiliser par exemple un standard RS485 ou CANBUS. Le bus de donnée peut alternativement être sans fil et utiliser par exemple un standard wifi ou Bluetooth.

Afin de conserver l'équilibre en temps réel des puissances électriques produites et consommées, le module 82 est configuré pour permettre un écrêtage de la puissance électrique délivrée par au moins une des cellules photovoltaïques si leur production d'énergie optimale est supérieure au besoin des différentes charges, par exemple lorsque la batterie 68 est pleine et que la machine électrique n'est pas sollicitée en moteur. L'écrêtage peut réduire ou annuler complètement la puissance délivrée en fonction des charges à alimenter. L'écrêtage est avantageusement réalisé pour chacun des circuits de cellules connectées entre elles. L'écrêtage peut se faire de façon indépendante pour chacun des circuits. L'écrêtage est réalisé en déplaçant le point de fonctionnement d'un ou plusieurs des MPPT du point 50 de fonctionnement à puissance maximale vers le point 49 correspondant à une tension en circuit ouvert. L'écrêtage permet d'éviter l'obligation de dissiper, par exemple par effet Joule, une trop grande puissance générée par les cellules solaires.

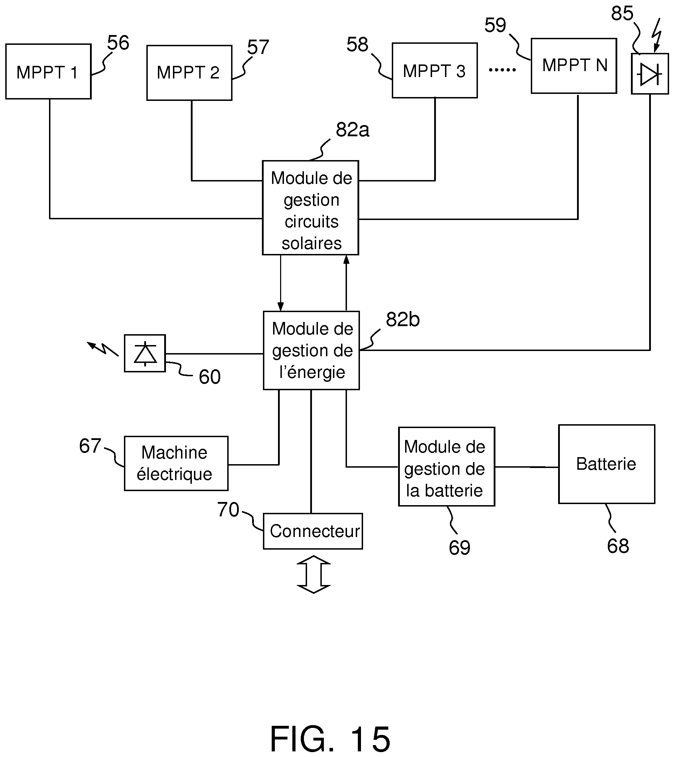

La figure 15 représente une variante du schéma bloc de la figure 14 dans laquelle le module 82 est séparé en deux sous ensembles 82a et 82b. Le sous ensemble 82a gère uniquement la production d'énergie provenant des différents MPPT 56 à 59 et le sous ensemble 82b gère l'énergie circulant de ou vers la machine électrique, le stockeur d'énergie 68, le connecteur 70, les autres éventuels consommateurs d'énergie tels que les diodes électroluminescentes 60 et de façon plus générale tout autre composant de la roue 15.

Lorsque les cellules solaires ne produisent pas d'énergie, par exemple la nuit, les MPPT et le sous ensemble 82a consomment inutilement de l'énergie pour leur fonctionnement interne. Il est possible de couper leur alimentation électrique afin d'économiser l'énergie stockée dans la batterie 68. A cet effet, la roue 15 comprend un détecteur de lumière configuré pour couper l'alimentation électrique du sous ensemble 82a et/ou des différents MPPT 56 à 59 si la lumière détectée est inférieure à un seuil. Le détecteur de lumière peut être un composant spécifique 85 tel qu'une photodiode raccordée au sous ensemble 82b. Alternativement, il est possible de détecter le niveau de lumière au moyen des groupes de cellules solaires 51 à 54. La détection de lumière peut également être utilisée pour allumer les diodes électroluminescentes 60. Le seuil d'allumage des diodes électroluminescentes 60 peut être différent de celui permettant l'alimentation du sous ensemble 82a et/ou des différents MPPT 56 à 59.

Les différents schémas blocs des figures 11 à 15 sont bien adaptés à la gestion des ombrages proches et distants. Lorsque le besoin en énergie est maximum, l'invention permet d'optimiser au mieux le fonctionnement des différentes cellules photovoltaïques. La répartition des cellules en différents circuits dont l'indépendance est assurée par les différents MPPT permet de s'adapter en temps réel aux variations des ombrages intervenant lorsque la roue 15 est en rotation.

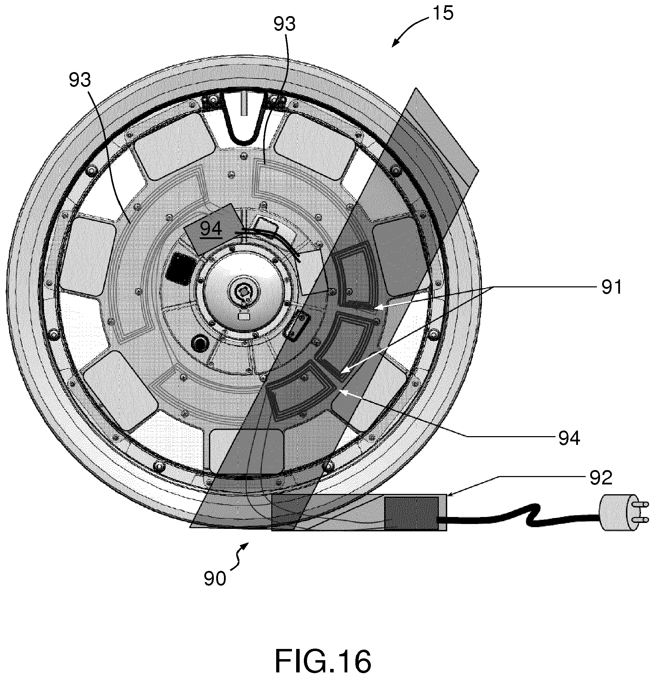

La figure 16 représente une variante de la roue 15 permettant un raccordement électrique sans contact vers l'extérieur de la roue 15. Le connecteur filaire 70 peut être remplacé par un connecteur à induction permettant d'échanger de l'énergie en entrée ou en sortie de la roue 15. Cette variante est particulièrement adaptée au rechargement de la batterie 68 lorsque le vélo 10 est à l'arrêt. La roue 15 est par exemple prise en sandwich dans une borne de rechargement 90 raccordée au secteur. La borne de rechargement 90 comprend une ou plusieurs bobines primaires 91 alimentées par le secteur par l'intermédiaire d'un module électronique 92. La roue 15 comprend plusieurs bobines secondaires 93 disposées radialement à l'intérieur de la jante 21. Les bobines secondaires 93 peuvent être situées entre les faces 21a et 21b et recouvertes par les cellules solaires photovoltaïques. Les bobines primaires 91 sont disposées en arc de cercle selon un rayon égal à celui des bobines secondaires 93 dans leur disposition radiale autour de l'axe 23. La borne de rechargement 90 permet d'accueillir la roue 15 dans une position déterminée, par exemple au moyen de butées sur lesquelles la roue 15 vient s'appuyer. Dans cette position, au moins une bobine secondaire 93 vient en regard d'une bobine primaire 91 afin de permettre le transfert d'énergie par induction entre la ou les bobines primaires 91 et la ou les bobines secondaires 93 en regard en traversant les cellules. L'énergie reçue par les bobines secondaires 93 est transférée au réseau électrique interne de la roue 15 au travers d'un module de conversion 94 qui assure principalement la conversion du courant alternatif reçu par les bobines secondaires 93 en courant continu utilisable par exemple par le module 82.

## Revendications

1. Roue de véhicule (15) équipée de cellules solaires photovoltaïques (25, 25a, 25b, 30), **caractérisée en ce qu'**elle comprend :
• plusieurs circuits (51, 52, 53, 54) comprenant chacun plusieurs cellules solaires photovoltaïques (25, 25a, 25b, 30) et un module (MPPT) de poursuite d'un point de puissance maximum des cellules solaires photovoltaïques (25, 25a, 25b, 30) du circuit, les cellules solaires photovoltaïques (25, 25a, 25b, 30) de chacun des circuits (51, 52, 53, 54) étant disposées sur un secteur angulaire radial (26, 27, 28, 29 ; 31, 32, 33, 34, 35, 36) de la roue (15), les différents secteurs étant distincts les uns des autres, les cellules solaires photovoltaïques (25, 25a, 25b, 30) de chacun des circuits (51, 52, 53, 54) étant connectées en série,
• un module (65, 80) de collecte de l'énergie délivrée par les différents modules de poursuite (MPPT).

2. Roue selon la revendication 1, **caractérisée en ce que** le module de collecte (65, 80) est configuré pour raccorder les différents circuits en série ou en parallèle et pour passer d'un raccordement série à un raccordement parallèle et inversement lors de l'utilisation de la roue (15).

3. Roue selon l'une des revendications précédentes, **caractérisée en ce que** toutes les cellules (25, 25a, 25b, 30) équipant la roue (15) sont identiques et **en ce que** les différents circuits (51, 52, 53, 54) comprennent chacun le même nombre de cellules solaires photovoltaïques (25, 25a, 25b, 30).

4. Roue selon l'une des revendications précédentes, **caractérisée en ce que** les cellules (25, 25a, 25b, 30) d'un des circuits (51, 52, 53, 54) sont formées de parties de cellules photovoltaïques du commerce.

5. Roue selon l'une des revendications précédentes, **caractérisée en ce que** la roue (15) comprend deux faces (21a, 21b) perpendiculaires à un axe (23) de rotation de la roue (15) et **en ce que** les cellules (25, 25a, 25b, 30) sont des cellules photovoltaïques double face, chacune des faces des cellules correspondant avec les faces (21a, 21b) de la roue (15).

6. Roue selon l'une des revendications précédentes, **caractérisée en ce qu'**elle comprend un stockeur d'énergie électrique (68) pouvant être rechargé par les cellules solaires photovoltaïques (25, 25a, 25b, 30).

7. Roue selon la revendication 6, **caractérisée en ce qu'**elle comprend une machine électrique (67) pouvant être alimentée par les cellules solaires photovoltaïques (25, 25a, 25b, 30) et pouvant entrainer la roue (15) en rotation et **en ce que** le stockeur d'énergie (68) échange de l'énergie avec la machine électrique (67).

8. Roue selon l'une des revendications 6 ou 7 **caractérisée en ce qu'**elle comprend en outre une charge électrique (60) alimentée par le stockeur d'énergie (68) et/ou par les cellules solaires photovoltaïques (25, 25a, 25b, 30).

9. Roue selon l'une des revendications précédentes, **caractérisée en ce qu'**elle comprend un connecteur (70) permettant d'échanger de l'énergie électrique vers l'extérieur de la roue (15).

10. Roue selon la revendication 9, **caractérisée en ce que** le connecteur est à induction et comprend plusieurs bobines secondaires (93) configurées pour recevoir de l'énergie d'une borne de rechargement (90) comprenant au moins une bobine primaire (91).

11. Roue selon l'une des revendications précédentes, **caractérisée en ce qu'**elle comprend un module de gestion de l'énergie (82) configuré pour équilibrer en temps réel des puissances électriques produites et consommées par les différents composants de la roue.

12. Roue selon la revendication 11, **caractérisée en ce que** le module de gestion de l'énergie (82) est configuré pour permettre un écrêtage de la puissance délivrée par au moins une des cellules photovoltaïques (25, 25a, 25b, 30).

13. Roue selon l'une des revendications 11 ou 12, **caractérisée en ce que** le module de gestion (82) comprend deux sous ensembles, dont un premier sous ensemble (82a) est dédié à la production d'énergie provenant des différents modules de poursuite (MPPT 56 à 59) et dont un second sous ensemble 82b gère les autres composants de la roue (15) consommant ou produisant de l'énergie et **en ce que** la roue (15) comprend un détecteur de lumière (51 à 54 ; 85) configuré pour couper l'alimentation électrique du premier sous ensemble (82a) et/ou des différents modules de poursuite (MPPT 56 à 59) si la lumière détectée est inférieure à un seuil.

14. Roue selon les revendications 8 et 13, **caractérisée en ce que** la charge électrique est un émetteur de lumière (60) et **en ce que** le détecteur de lumière (51 à 54 ; 85) est configuré pour alimenter l'émetteur de lumière (60) si la lumière détectée est inférieure à un seuil.

15. Roue selon l'une des revendications précédentes, **caractérisée en ce qu'**elle est ajourée entre les cellules solaires photovoltaïques (25, 25a, 25b, 30).

## Patentansprüche

1. Fahrzeugrad (15), das mit fotovoltaischen Solarzellen (25, 25a, 25b, 30) ausgestattet ist, **dadurch gekennzeichnet, dass** es Folgendes umfasst:
• mehrere Stromkreise (51, 52, 53, 54), die jeweils mehrere fotovoltaische Solarzellen (25, 25a, 25b, 30) und ein Modul (MPPT) zum Verfolgen eines Punkts maximaler Leistung der fotovoltaischen Solarzellen (25, 25a, 25b, 30) der Schaltung umfassen, wobei die fotovoltaischen Solarzellen (25, 25a, 25b, 30) jedes der Stromkreise (51, 52, 53, 54) auf einem radialen Winkelsektor (26, 27, 28, 29; 31, 32, 33, 34, 35, 36) des Rades (15) angeordnet sind, wobei die verschiedenen Sektoren sich voneinander unterscheiden, wobei die fotovoltaischen Solarzellen (25, 25a, 25b, 30) jedes der Stromkreise (51, 52, 53, 54) in Serie geschaltet sind,
• ein Modul (65, 80) zum Sammeln der von den verschiedenen Verfolgungsmodulen (MPPT) gelieferten Energie.

2. Rad nach Anspruch 1, **dadurch gekennzeichnet, dass** das Sammelmodul (65, 80) zum Schalten der verschiedenen Stromkreise in Serie oder parallel oder zum Umschalten von einer Serienschaltung auf eine Parallelschaltung und umgekehrt bei der Benutzung des Rades (15) konfiguriert ist.

3. Rad nach einem der vorherigen Ansprüche, **dadurch gekennzeichnet, dass** alle Zellen (25, 25a, 25b, 30), mit denen das Rad (15) ausgestattet ist, identisch sind, und dadurch, dass die verschiedenen Stromkreise (51, 52, 53, 54) jeweils dieselbe Anzahl von fotovoltaischen Solarzellen (25, 25a, 25b, 30) umfassen.

4. Rad nach einem der vorherigen Ansprüche, **dadurch gekennzeichnet, dass** die Zellen (25, 25a, 25b, 30) eines der Stromkreise (51, 52, 53, 54) aus Teilen von handelsüblichen fotovoltaischen Zellen gebildet sind.

5. Rad nach einem der vorherigen Ansprüche, **dadurch gekennzeichnet, dass** das Rad (15) zwei Flächen (21a, 21b) lotrecht zu einer Drehachse (23) des Rades (15) umfasst, und dadurch, dass die Zellen (25, 25a, 25b, 30) fotovoltaische Doppelflächenzellen sind, wobei jede der Flächen der Zellen den Flächen (21a, 21b) des Rades (15) entspricht.

6. Rad nach einem der vorherigen Ansprüche, **dadurch gekennzeichnet, dass** es einen Speicher (68) für elektrische Energie umfasst, der durch die fotovoltaischen Solarzellen (25, 25a, 25b, 30) aufgeladen werden kann.

7. Rad nach Anspruch 6, **dadurch gekennzeichnet, dass** es eine Elektromaschine (67) umfasst, die von den fotovoltaischen Solarzellen (25, 25a, 25b, 30) gespeist werden und das Rad (15) drehend antreiben kann, und dadurch, dass der Energiespeicher (68) Energie mit der Elektromaschine (67) austauscht.

8. Rad nach Anspruch 6 oder 7, **dadurch gekennzeichnet, dass** es ferner eine elektrische Ladung (60) umfasst, die von dem Energiespeicher (68) und/oder von den fotovoltaischen Solarzellen (25, 25a, 25b, 30) gespeist wird.

9. Rad nach einem der vorherigen Ansprüche, **dadurch gekennzeichnet, dass** es einen Verbinder (70) umfasst, der den Austausch von elektrischer Energie mit der Außenseite des Rades (15) zulässt.

10. Rad nach Anspruch 9, **dadurch gekennzeichnet, dass** der Verbinder ein Induktionsverbinder ist und mehrere Sekundärspulen (93) umfasst, die zum Aufnehmen der Energie eines Ladeanschlusses (90) konfiguriert sind, der wenigstens eine Primärspule (91) umfasst.

11. Rad nach einem der vorherigen Ansprüche, **dadurch gekennzeichnet, dass** es ein Energieverwaltungsmodul (82) umfasst, konfiguriert zum Ausgleichen, in Echtzeit, der elektrischen Leistungen, die von den verschiedenen Komponenten des Rades produziert und verbraucht werden.

12. Rad nach Anspruch 11, **dadurch gekennzeichnet, dass** das Energieverwaltungsmodul (82) zum Zulassen einer Begrenzung der Spitzen der von wenigstens einer der fotovoltaischen Zellen (25, 25a, 25b, 30) gelieferten Leistung konfiguriert ist.

13. Rad nach Anspruch 11 oder 12, **dadurch gekennzeichnet, dass** das Verwaltungsmodul (82) zwei Unterbaugruppen umfasst, von denen eine erste Unterbaugruppe (82a) für die Produktion von Energie dediziert ist, die von den verschiedenen Verfolgungsmodulen (MPPT 56 bis 59) kommt, und von denen eine zweite Unterbaugruppe (82b) die anderen Komponenten des Rades (15) verwaltet, die Energie verbrauchen oder produzieren, und dadurch, dass das Rad (15) einen Lichtdetektor (51 bis 54; 85) umfasst, der zum Unterbrechen der Stromversorgung der ersten Unterbaugruppe (82a) und/oder der unterschiedlichen Verfolgungsmodule (MPPT 56 bis 59) konfiguriert ist, wenn das erkannte Licht geringer ist als eine Schwelle.

14. Rad nach den Ansprüchen 8 und 13, **dadurch gekennzeichnet, dass** die elektrische Ladung ein Lichtsender (60) ist, und dadurch, dass der Lichtdetektor (51 bis 54; 85) zum Versorgen des Lichtsenders (60) konfiguriert ist, wenn das erkannte Licht geringer ist als eine Schwelle.

15. Rad nach einem der vorherigen Ansprüche, **dadurch gekennzeichnet, dass** es zwischen den fotovoltaischen Solarzellen (25, 25a, 25b, 30) perforiert ist.

## Claims

1. Vehicle wheel (15) which is provided with photovoltaic solar cells (25, 25a, 25b, 30), **characterised in that** it comprises:
• a plurality of circuits (51, 52, 53, 54) which each comprise a plurality of photovoltaic solar cells (25, 25a, 25b, 30) and a module (MPPT) for tracking a maximum power point of the photovoltaic solar cells (25, 25a, 25b, 30) of the circuit, the photovoltaic solar cells (25, 25a, 25b, 30) of each of the circuits (51, 52, 53, 54) being arranged on a radial angular sector (26, 27, 28, 29; 31, 32, 33, 34, 35, 36) of the wheel (15), the different sectors being separate from each other, the photovoltaic solar cells (25, 25a, 25b, 30) of each of the circuits (51, 52, 53, 54) being connected in series,
• a module (65, 80) for collecting the energy supplied by the different tracking modules (MPPT).

2. Wheel according to claim 1, **characterised in that** the collection module (65, 80) is configured to connect the different circuits in series or in parallel and to change from a series connection to a parallel connection and vice versa when the wheel (15) is used.

3. Wheel according to either of the preceding claims, **characterised in that** all the cells (25, 25a, 25b, 30) with which the wheel (15) is provided are identical and **in that** the different circuits (51, 52, 53, 54) each comprise the same number of photovoltaic solar cells (25, 25a, 25b, 30).

4. Wheel according to any one of the preceding claims, **characterised in that** the cells (25, 25a, 25b, 30) of one of the circuits (51, 52, 53, 54) are formed by portions of commercial photovoltaic cells.

5. Wheel according to any one of the preceding claims, **characterised in that** the wheel (15) comprises two faces (21a, 21b) perpendicular to a rotation axis (23) of the wheel (15) and **in that** the cells (25, 25a, 25b, 30) are dual-face photovoltaic cells, each of the faces of the cells corresponding to the faces (21a, 21b) of the wheel (15).

6. Wheel according to any one of the preceding claims, **characterised in that** it comprises an electrical energy store (68) which can be recharged by the photovoltaic solar cells (25, 25a, 25b, 30).

7. Wheel according to claim 6, **characterised in that** it comprises an electric machine (67) which can be supplied by the photovoltaic solar cells (25, 25a, 25b, 30) and which can drive the wheel (15) in rotation and **in that** the energy store (68) exchanges energy with the electric machine (67).

8. Wheel according to either claim 6 or claim 7, **characterised in that** it further comprises an electric charge (60) which is supplied by the energy store (68) and/or by the photovoltaic solar cells (25, 25a, 25b, 30).

9. Wheel according to any one of the preceding claims, **characterised in that** it comprises a connector (70) which enables electrical energy to be exchanged towards the outer side of the wheel (15).

10. Wheel according to claim 9, **characterised in that** the connector is of the induction type and comprises a plurality of secondary coils (93) which are configured to receive energy from a recharging coil (90) which comprises at least one primary coil (91).

11. Wheel according to any one of the preceding claims, **characterised in that** it comprises an energy management module (82) which is configured to balance in real time electrical power levels produced and consumed by the various components of the wheel.

12. Wheel according to claim 11, **characterised in that** the energy management module (82) is configured to enable capping of the power supplied by at least one of the photovoltaic cells (25, 25a, 25b, 30).

13. Wheel according to either claim 11 or claim 12, **characterised in that** the management module (82) comprises two sub-assemblies, of which a first sub-assembly (82a) is dedicated to the production of energy originating from the various tracking modules (MPPT 56 to 59) and of which a second sub-assembly (82b) manages the other components of the wheel (15) consuming or producing energy and **in that** the wheel (15) comprises a light detector (51 to 54; 85) which is configured to cut the electrical power supply of the first sub-assembly (82a) and/or the various tracking modules (MPPT 56 to 59) if the light detected is below a threshold.

14. Wheel according to claims 8 and 13, **characterised in that** the electrical charge is a light transmitter (60) and **in that** the light detector (51 to 54; 85) is configured to supply the light transmitter (60) if the light detected is below a threshold.

15. Wheel according to any one of the preceding claims, **characterised in that** it is perforated between the photovoltaic solar cells (25, 25a, 25b, 30).
